# EUROPEAN PATENT SPECIFICATION

(11) **EP 1 047 729 B1**
(45) Date of publication and mention of the grant of the patent: **08.01.2003**
(21) Application number: 98932163.3
(22) Date of filing: 10.06.1998
(51) Int. Cl.: C08L 89/00, D21C 9/00, D21H 21/30

(54) **COMPOSITION FOR BLEACHING MECHANICAL PULP**
ZUSAMMENSETZUNG ZUM BLEICHEN VON MECHANISCHER PULPE
COMPOSITION DE BLANCHIMENT DE LA PATE MECHANIQUE

(30) Priority: 10.12.1997 IT MI972729
(43) Date of publication of application: 02.11.2000
(73) Proprietor: De Donato, Fausto, 20047 Brugherio (IT)
(72) Inventor: De Donato, Fausto, 20047 Brugherio (IT)
(74) Representative: Riccardi, Sergio
(86) International application number: EP9803665
(87) International publication number: WO99029779

(56) References cited:
- EP-A- 0 191 756
- DE-A- 1 469 229
- DE-A- 3 737 553
- DE-A- 4 202 703
- GB-A- 1 021 887

## Description

The present invention relates to the use of a composition for bleaching mechanical woodpulp in order to obtain paper products having improved visual and touch features.

It is known that white paper forms most of paper production and that white, monolayer or multilayer board forms almost the totality of board production.

In order to obtain a high white degree of paper and board, white celluloses and/or extra-white celluloses and pure white mineral fillers such as caolin, calcium carbonate and so forth are used by paper industry. The white degree so obtained by the use of these selected raw materials can be further increased by using said optical bleaching agents.

Optical bleaching agents are fluorescent substances able to absorb UV radiation and to emit light with lower energy and, thereafter, with higher wavelength in the visible range of the solar spectrum corresponding to the blue-violet wavelength. In this way, when the same amount of incident light is absorbed, the reflected visible light increases, thereby the sheet looks whiter to the naked eye than what it actually is. This is allowed by the compensation of the blue-violet emission of the optical bleaching agent towards the yellowish component of paper, thereby the whole effect is due to the mixing of substrate colour with the fluorescent light.

It is therefore obvious that the characteristic colour of the substrate strongly affects the final bleaching result. The optical bleaching agent efficiency is, as a consequence, always related to the material to be bleached.

The two basic components as raw materials used in paper industry are several kinds of chemical woodpulp and mechanical woodpulps, the quantitative ratios of which determine the preparation of different kinds of paper products, which are available on the market.

Different aqueous compositions of optical bleaching agents, aimed to bleach celluloses pulp, which initially already have a rather low yellowish component, are known.

A first bleaching agent based on 4,4'-diamine-2.2'-stilbensolfonic acid was described in DE1 469 229 wherein the bleaching agent was used to bleach a paper pulp bleached with sulphite techique or to coat the paper so obtained along with a pigment, such as clay, and a binder, e.g. casein (page 2, line 7-12, page 5, line 5).

Another coating composition for final paper sheet or web comprising polymers dispersions, alkaline casein solutions or other proteic substances as binder was described in GB-A-1 0221 887. These prior documents have suggested a coating method which is only adapted to be applied on a final product, i.e. the sheets or web of paper, obtained by an high percentage of cellulose material and having a basic high white degree. Up to now, there has not been a process or a composition enabling paper based on high percentages of mechanical woodpulp to have the same properties as paper produced by a high percentage of cellulose products i.e. from chemical pulp as explained hereinafter.

The woodpulps on the market are identified by codes which state the production process of mechanical woodpulp itself and have their own basic peculiar characteristic brighteness as stated in the following:

| WOODPULP | BRIGHTENESS (%) ISO |
|---|---|
| SGW (Stone Ground Wood) | 63 |
| RMP (Refiner Mechanical Pulp) | 62 |
| TMP (ThermoMechanical Pulp) | 60 |
| PGW (Pressure Ground Wood) | 58 |
| TGW (ThermoGrinding Wood) | 56 |
| CTMP (ChemoThermoMechanical Pulp) | 60 |
| CMP (ChemoMechanical Pulp) | 52 |

A first attempt to reduce the strongly yellow peculiarity of the different mechanical woodpulp produced, was either a reductive bleaching with sodium dithionite (Na₂S₂O₄), leading to an increase of white degree up to 12% ISO or an oxidative bleaching with sodium peroxide or hydrogen peroxide at pH 10-10.5, leading to an increase of white degree up to 14%. A combination of the two bleaching processes in sequence peroxide/dithionite is usually used in order to achieve a brighteness increase of 16-20 points compared to the initial brightness stated above. (For a detailed description of these processes see European patent application 0191716)

The mechanical woodpulps so bleached cannot be further bleached to a higher white degree, even by using a high concentration of optical bleaching agent and, besides, their yellowing tendency cannot be changed ("ULLMANN'S ENCYCLOPEDIA OF INDUSTRIAL CHEMISTRY", 1991, vol. A18, pg. 601-602).

Moreover mechanical woodpulps have also scarce touch features, i.e. the surface of the sheets obtained with high amounts of mechanical woodpulp is rough, thereby, it is not very satisfactory to touch, contrary to sheets obtained with high amounts of cellulose pulp, which have smooth surfaces.

Up to now, in spite of the efforts made, a method enabling the mechanical woodpulps to have visual features similar to the chemical woodpulp has not been found out as yet.

It is further known that mechanical woodpulp is a fibrous product which is combined with the cellulose in order to give a stiffness degree to the final paper product. Such feature is a cubic function of the material thickness, and as woodpulp density is lower than that of chemical woodpulp, being the weight equal, the mechanical woodpulp is thicker and stiffer than the cellulose. The mechanical woodpulp also has a higher opacity degree and remarkably lower costs up to 25-30% less than the costs of chemical woodpulp.

It is hence obvious that if more mechanical woodpulp could be used instead of chemical woodpulp for the production of the final paper, a lighter product having the same stiffness, opacity and brightness features would be obtained at lower costs than prior art products. It must furthemore be taken into account that a decrease in chemical woodpulp use would reduce the environmental problem of tree felling considering that the yield of mechanical woodpulp is about 90 % and of chemical woodpulp is about 55%.

The advantage, which would be achieved by having a composition allowing the bleaching problem of mechanical woodpulps to be solved and the remarkable use in place of the cellulose pulp, is therefore clear.

It is an object of the present invention to provide a composition for bleaching the mechanical woodpulp in order to obtain light, stiff and mat paper products having a high white degree and improved touch features.

It is further an object of the present invention to provide a composition for bleaching the mechanical woodpulp in order to reduce the use of the chemical woodpulp in paper industry.

It is still another object of the present invention to provide compositions that allow the production of paper products at lower costs.

Aforesaid objects and advantages are achieved by using a composition as stated in claim 1.

The additive ingredient which is added to the optical bleaching agents in order to obtain the bleaching composition according to the present invention can be caseine, caseine derivatives, soya proteins or their mixtures.

The composition according to the invention will be better understood from the following detailed description followed by two illustrative and not limitative preferred embodiments of the invention. Wherever the term "parts" is used, it means "parts by weight", unless otherwise specified.

The mechanical woodpulp can be any mechanical woodpulp however obtained, especially selected from the group consisting of SGW (Stone GroundWood), RMP (Refined Mechanical Pulp), TMP (ThermoMechanical Pulp), PGW (Pressure Ground Wood), TGW (ThermoGrindina Wood), CTMP (ChemoThermoMechanical Pulp), CMP (ChemoMechanical Pulp) and preferably from poplar and fir-tree.

The mechanical woodpulp to be treated with the composition of the invention is preferably either CTMP, which is obtained by a mechanical process along with chemothermal treatment, or CMP, which is obtained by mechanical process together with treatments with alkali compounds or acids.

The composition according to the invention can be directly applied on the obtained mechanical woodpulp or preferably on the mechanical woodpulp pretreated with bleaching cycles also called semichemical pulp as explained in page 1b, which are of generally known industrial kind and preferably cycles of peroxide/sodium dithionite.

The additive ingredient is dissolved in an alkaline solution at a concentration between 1% and 30% based on weight solution, and preferably 13% of caseine or derivative thereof or 16% of soya proteins. Said alkaline solution of the additive ingredient is added to the optical bleaching agent solution at ratios of additive ingredient solution to optical bleaching agent solution between 0.1 and 10, preferably 0.5-5 and more preferably equal to 1. The optical bleaching agent can be added as a powder or more preferably it can be dissolved in water.

Said optical bleaching agent is a derivative of compounds selected from the group consisting of carbocycles, distyrilbenzenes, distyrilbiphenyls, divinylstilbenes, bistriazinylaminostilbenes, stilbenyl-2H-triazoles, stilbenyl-2H-naphtho[1,2-d]triazoles, bis(1,2,3-triazol-3-yl)stilbenes, benzoxazoles, stilbenylbenzoxazoles, bis(benzoxazoles), furans, benxo[b]furans, benzimidazoles, bis(benzo[b]furan-2-yl)biphenyls,cationic benzimidazoles, 1,3-Biphenyl-2-pyrazolines, coumarins, naphthalimides, 1,3,5-triazin-2-yl derivatives and mixtures thereof. Said optical bleaching agent is preferably a compound derived from the family of stilbenes and more preferably is a derivative of bistriazinylaminostilbene. Therefore the optical bleaching agent can be directly added to the caseine or a derivative thereof solution without any pre-treatment.

The caseine derivatives are preferably caseinates of different alkaline or earth alkaline metals, such as e.g. sodium caseinate, and these are dissolved before adding the optical bleaching agent. According to the invention it is provided that a mixture of caseine and a derivative thereof is used under the same conditions stated for the single components.

The solution of additive ingrendient and optical bleaching agent is mixed at a temperature between 15 °C and 80 °C, preferably 30-50 °C and more preferably 40 °C for about 10-30 minutes. To said composition optional excipients such as preservatives, pH stabilizers are added in order to have a formulation to be placed on the market as a ready for use product. On the other hand the composition can be prepared when being used.

The composition according to the invention is metered on the base of the amount of dry fiber to be bleached and on the base of the desired white degree. It is preferably added in amounts between 0.1 and 10% based on the fiber dry weight to be bleached.

The maximum white degree achievable by applying the composition of the invention is obtained by treating the mechanical woodpulp sheet to be bleached at pH ≤ 7 after it has already been treated with the composition of the invention, preferably at pH 5.5, with a compound selected from the group consisting of aluminum salts, mineral acids, organic acids, preferably aluminum sulfate.

### Example 1

100 parts of caseine are dispersed in 400 parts of water by stirring for ten minutes. Thereafter 8 parts of sodium tetraborate and 100 parts of water are added and the solution is heated at a temperature of 40 °C for 10 minutes. 7 parts of an alkali, preferably ammonia, are then added, heating at 60 °C and stirring for further 20 minutes. Finally, 160 parts of water are added and the solution is stirred for 20 minutes at 60 °C.

50 parts of the solution so obtained are then mixed with 50 parts of a liquid optical bleaching agent or a powder optical bleaching agent dissolved in water so as to have a solution with a maximal possible concentration. The product so obtained can be used directly or be added with optional additives for the preparation of a ready-to-sell product.

### Example 2

130 parts of soya proteins are dispersed in 500 parts of water by stirring for ten minutes. Thereafter 10 parts of sodium tetraborate and 100 parts of water are added and the solution is heated at a temperature of 40 °C for 10 minutes. 10 parts of an alkali, preferably ammonia, are then added, heating at 60 °C and stirring for further 20 minutes. Finally, 200 parts of water are added and the solution is stirred for 20 minutes at 60 °C.

50 parts of the solution so obtained are then mixed with 50 parts of a liquid optical bleaching agent or a powder optical bleaching agent dissolved in water so as to have a solution with a maximal possible concentration. The product so obtained can be used directly or be added with optional additives for the preparation of a ready-to-sell product.

The surprising advantages of the composition of the invention are now illustrated with reference to the results of tests carried out in laboratory, at the Experimental Centre for Cellulose, Paper and textile, vegetable and artificial Fibers in Milan.

### Reflection Test 1

4 samples were examined as stated in the following:
- Sample 1:: mechanical woodpulp sheet, pretreated with bleaching cycles, manufactured with a static sheetmaker (FS) with grammage of about 120 g/m²
- Sample 2:: mechanical woodpulp sheet as sample 1 treated with 2% of optical bleaching agent and caseine solution at 1:1 ratio based on woodpulp dry weight.
- Sample 3:: sheet of bleached cellulose having short fibers.
- Sample 4:: mechanical woodpulp sheet, pretreated with bleaching cycles, manufactured by dynamic sheetmaker (Fd) of TechPap with a grammage of 120g/m² treated with 2% of optical bleaching agent and caseine solution at 1:1 ratio based on woodpulp dry weight.

These four samples were tested for the white degree through reflection according to the UNI 7623-86 method. Data which is set forth in Table 1 were obtained.

**Table 1**

| Sample | 1 | 2 | 3 | 4 |
|---|---|---|---|---|
| Reflection (%) ISO | 77.0 | 84.4 | 83.4 | 84.9 |

Sample 2 treated with the composition according to the invention shows a higher reflection percentage than sample 3, made of bleached cellulose having short fibers. Sample 4 shows results almost equal to sample 2, underlining that the surprising white effect is feasible on industrial scale, being sample 4 obtained through a dynamic system, which simulates the industrial conditions of making the sheet.

### Reflection test 2

7 samples, four of which stated as A and being of CTMP woodpulp of Miller Western S.W., and the remaining three, stated as B and being of P85 CMP woodpulp of Sicem Saga, were examined. Both mechanical woodpulps had been pretreated with bleaching cycles of peroxide/sodium dithionite.
- Sample 1A:: mechanical woodpulp A
- Sample 2A:: mechanical woodpulp A treated with 1% of a optical bleaching agent available on the market
- Sample 3A:: mechanical woodpulp A treated with 2% of the solution of the invention at optical bleaching agent/caseine ratio equal to 1.
- Sample 4A:: mechanical woodpulp A treated with 4% of the solution of the invention at optical bleaching agent/caseine ratio equal to 1.
- Sample 1B:: mechanical woodpulp B .
- Sample 2B:: mechanical woodpulp B treated with 1% of a optical bleaching agent available on the market.
- Sample 3B:: mechanical woodpulp B treated with 2% of the solution of the invention at optical bleaching agent/caseine ratio equal to 1.
The reflection was tested in order to establish the white degree according to the UNI 7623-86 method, and the data thereof are set forth in Table 2.

**Table 2**

| Sample | 1A | 2A | 3A | 4A | 1B | 2B | 3B |
|---|---|---|---|---|---|---|---|
| Reflection (%) ISO | 72.7 | 73.4 | 77.9 | 79.1 | 78.6 | 81.9 | 86.6 |

As shown from data in Table 2 the reflection remarkably increases for sample 3A and still more by doubling the amount of the solution (4A) according to the invention in comparison with sample (1A) which is not treated or sample (2A) treated with a optical bleaching agent. Sample 1B of woodpulp with a reflection higher than sample A, when treated with the composition (3B) of the invention, shows the same increase of reflection like 3A, confirming the remarkable bleaching result of the composition according to the invention.

### Reflection test 3

Reflection test 1 was repeated using the same mechanical woodpulp bleached under the same conditions and amounts, except for caseine which was replaced by soya proteins. Reflection data (%ISO) are set forth in the following Table 3.

**Table 3**

| Sample | 1 | 2 | 3 | 4 |
|---|---|---|---|---|
| Reflection % ISO | 77.0 | 84.0 | 83.4 | 84.2 |

As indicated in Table 3, samples 2 and 4, treated with the solution of the invention, show higher reflection than sample 3, being of bleached cellulose with short fibers, confirming the observations atready made in the case of reflection test I which uses caseine.

## Claims

1. Use of a composition comprising one or a mixture of optical bleaching agents and a further additive ingredient selected from the group consisting of caseine, caseine derivatives, soya proteins and mixtures thereof for bleaching mechanical woodpulp, wherein the mechanical woodpulp is selected from the group consisting of SGW (Stone GroundWood), RMP (Refined Mechanical Pulp), TMP (ThermoMechanical Pulp), PGW (Pressure Ground Wood), TGW (ThermoGrinding Wood), CTMP (ChemoThermoMechanical Pulp), CMP (Chemo mechanical Pulp).

2. Use of a composition according to claim 1 wherein the optical bleaching agent is a derivative of compounds selected from the group consisting of carbocycles, distyrilbenzenes, distyrilbiphenyls, divinylstilbenes, bistriazinylaminostilbenes, stilbenyl-2H-triazoles, stilbenyl-2H-naphtho[ 1,2-d]triazoles, bis(1,2,3 -triazol-3-yl)stilbenes, benzoxazoles, stilbenylbenzoxazoles, bis(benzoxazoles), furans, benzo[b]furans, benzimidazofes, bis(benzo[blfuran-2-yl)biphenyls, cationic benzimidazoles, 1,3-diphenyl-2-pyrazolines, coumarins, naphthalimides, 1,3,5-triazin-2-yl derivatives and mixtures thereof.

3. Use of a composition according to claim 2 wherein the optical bleaching agent is a derivative from the family of stilbenes, preferably a derivative of bistriazinylaminostilbene.

4. Use of a composition according to any one of the preceding claims wherein the derivative of caseine is caseinate of alkaline or earth alkaline metals.

5. Use of a composition according to claim 4 wherein the derivative of caseine is sodium caseinate.

6. Use of a composition according to any one of the preceding claims **characterized in that** said composition is added with excipients for the preparation of a commercial ready-to sell (finished) product.

7. Mechanical woodpulp bleached by using the composition according to claim 1, wherein the mechanical woodpulp is selected from the group consisting of SGW (Stone GroundWood), RMP (Refined Mechanical Pulp), TMP (Thermomechanical Pulp), PGW (Pressure Ground Wood), TGW (ThermoGrinding Wood), CTMP (ChemoThermoMechanical Pulp), CMP (Chemo mechanical Pulp).

8. Mechanical woodpulp according to claims 7 wherein the woodpulp is CTMP (ChemoThermoMechanical Pulp) or CMP (Chemo mechanical Pulp).

## Patentansprüche

1. Verwendung einer Zusammensetzung, die zum Bleichen von mechanischem Holzstoff ein einziges oder eine Mischung aus optischen Bleichmitteln und einen darüber hinaus zugeführten Bestandteil enthält, welcher ausgewählt wird aus der Gruppe aus Casein, Casein-Derivaten, Sojaproteinen und Mischungen derselben, wobei der mechanische Holzstoff aus der Gruppe ausgewählt wird, die aus SGW (Stein-Holzschliff), RMP (Refiner-Holzstoff), TMP (thermomechanischer Holzstoff), PGW (Druckschleif-Holzstoff), TGW (Thermo-Holzschliff), CTMP (chemothermomechanischer Holzstoff) und CMP (chemomechanischer Holzstoff) besteht.

2. Verwendung einer Zusammensetzung nach Anspruch 1, bei der das optische Bleichmittel ein Derivat von Verbindungen ist, die ausgewählt werden aus der Gruppe aus carbocyclischen Verbindungen, Distyrilbenzenen, Distyrilbiphenylen, Divinylstilbenen, Bistriazinylaminostilbenen, Stilbenyl-2H-triazolen, Stilbenyl-2H-naphto[1,2-d]triazolen, bis(1,2,3-Triazol-3-yl)stilbenen, Benzoxazolen, Stilbenylbenzoxazolen, bis(Benzoxazolen), Furanen, Benzo[b]furanen, Benzimidazolen, bis(Benzo[b]furan-2-yl)biphenylen, kationischen Benzimidazolen, 1,3-Diphenyl-2-pyrazolinen, Cumarinen, Naphtalimiden, 1,3,5-Triazin-2-yl-Derivaten und Mischungen hieraus.

3. Verwendung einer Zusammensetzung nach Anspruch 2, bei der das optische Bleichmittel ein Derivat aus der Familie der Stilbene, vorzugsweise ein Derivat von Bistriazinylaminostilben ist.

4. Verwendung einer Zusammensetzung nach einem der vorhergehenden Ansprüche, bei der das Casein-Derivat ein Caseinat von alkalischen oder erdalkalischen Metallen ist.

5. Verwendung einer Zusammensetzung nach Anspruch 4, bei der das Casein-Derivat Natriumcaseinat ist.

6. Verwendung einer Zusammensetzung nach einem der vorhergehenden Ansprüche, **dadurch gekennzeichnet, dass** zu der Zusammensetzung Bindemittel hinzugegeben werden, um ein kommerzielles, verkaufsfertiges (End-) Produkt herzustellen.

7. Mechanischer Holzstoff, gebleicht unter Verwendung der Zusammensetzung nach Anspruch 1, wobei der mechanische Holzstoff ausgewählt wird aus der Gruppe aus SGW (Stein-Holzschliff), RMP (Refiner-Holzstoff), TMP (thermomechanischer Holzstoff), PGW (Druckschleif-Holzstoff), TGW (Thermo-Holzschliff), CTMP (chemothermomechanischer Holzstoff) und CMP (chemomechanischer Holzstoff).

8. Mechanischer Holzstoff nach Anspruch 7, wobei der Holzstoff ein CTMP (chemothermomechanischer Holzstoff) oder ein CMP (chemomechanischer Holzstoff) ist.

## Revendications

1. Utilisation d'une composition comprenant un agent de blanchiment optique ou bien un mélange d'agents de blanchiment optiques et un autre ingrédient additif sélectionné parmi le groupe englobant la caséine, les dérivés de caséine, les protéines de soja et leurs mélanges pour effectuer le blanchiment mécanique de la cellulose technique, laquelle cellulose technique étant choisie parmi le groupe englobant la pâte mécanique concassée (SGW), la pâte mécanique raffinée (RMP), la pâte thermomécanique (TMP), la pâte mécanique sous pression (PGW), la pâte thermoconcassée (TGW), la pâte chimico-thermomécanique (CTMP), la pâte chimicomécanique (CMP).

2. Utilisation d'une composition selon la revendication 1 où l'agent de blanchiment optique est un dérivé de composés sélectionnés parmi le groupe englobant les carbocycles, distyrilbenzènes, distyrilbiphényles, divinylstilbènes, bistriazinylaminostilbènes, stilbényl-2H-triazoles, stilbényl-2H-naphto[1,2-d] triazoles, bis(1,2,3-triazol-3-yl)stilbènes, benzoxazoles, stilbenylbenzoxazoles, bis(benzoxazoles), furanes, benzo[b]furanes, benzimidazoles, bis(benzo[b] furane-2-yk)biphényles, benzimidazoles cationiques, 1,3-diphényl-2-pyrazolines, coumarines, naphtalimides, dérivés 1,3,5-triazine-2-yliques et leurs mélanges.

3. Utilisation d'une composition selon revendication 2 où l'agent de blanchiment optique est un dérivé de la famille de stilbènes, de préférence un dérivé de bistriazinylaminostilbène.

4. Utilisation d'une composition selon l'une quelconque des revendications précédentes où le dérivé de caséine est le caséinate de métaux alcalins ou de métaux alcalins terreux.

5. Utilisation d'une composition selon la revendication 4 où le dérivé de caséine est le caséinate de sodium.

6. Utilisation d'une composition selon l'une quelconque des revendications précédentes, **caractérisée en ce que** l'on ajoute à ladite composition des excipients pour la préparation d'un produit (fini) prêt à la vente dans le commerce.

7. Cellulose technique mécanique blanchie à l'aide de la composition selon la revendication 1, où la cellulose mécanique est sélectionnée parmi le groupe englobant la pâte mécanique concassée (SGW), la pâte mécanique raffinée (RMP), la pâte thermomécanique (TMP), la pâte mécanique sous pression (PGW), la pâte thermpconcassée (TGW), la pâte chimico-thermomécanique (CTMP), la pâte chirnicomécanique (CMP).

8. Cellulose technique mécanique selon la revendication 7, où la cellulose technique est la pâte chimico-thermomécanique (CTMP) ou la pâte chimicomécanique (CMP).
